Europäisches Patentamt

European Patent Office

Office européen des brevets

(19)

(11) Veröffentlichungsnummer : **0 129 836**
**B1**

(12) **EUROPÄISCHE PATENTSCHRIFT**

(45) Veröffentlichungstag der Patentschrift :
**11.10.89**

(21) Anmeldenummer : **84107057.6**

(22) Anmeldetag : **19.06.84**

(51) Int. Cl.⁴ : **H 04 L 25/00, G 11 B 5/09**

(54) Schaltungsanordnung zum Wiedergewinnen von in binären Datensignalen enthaltenen Daten.

(30) Priorität : **23.06.83 DE 3322623**

(43) Veröffentlichungstag der Anmeldung :
**02.01.85 Patentblatt 85/01**

(45) Bekanntmachung des Hinweises auf die Patenterteilung : **11.10.89 Patentblatt 89/41**

(84) Benannte Vertragsstaaten :
**AT CH DE FR GB IT LI NL SE**

(56) Entgegenhaltungen :
**DE—A— 2 221 134**
**DE—A— 2 638 513**
**DE—A— 2 849 368**
**US—A— 3 506 923**
**US—A— 3 893 170**
**US—A— 4 246 545**
**ELECTRONICS INTERNATIONAL, Band 55, Nr. 7, April 1983, Seiten 155-157, New York, US; G. DI BIANCA: "Ingenious data encoding fills floppy disks twice as full"**

(73) Patentinhaber : **Siemens Aktiengesellschaft**
**Wittelsbacherplatz 2**
**D-8000 München 2 (DE)**

(72) Erfinder : **Schmidt, Herbert**
**Johann-Hackl-Ring 34**
**D-8011 Neukeferloh (DE)**

EP 0 129 836 B1

## Beschreibung

Die Erfindung bezieht sich auf eine Schaltungsanordnung zum Wiedergewinnen von in binären Datensignalen enthaltenen Daten entsprechend dem Oberbegriff des Patentanspruchs 1.

Aus der DE-OS 22 21 134 ist eine Schaltungsanordnung zum Wiedergewinnen von in binären Datensignalen enthaltenen Daten bekannt, bei der die binären Datensignale mit in einem Phasenregelkreis erzeugten Bezugssignalen multipliziert werden. Das Produkt der beiden Signale wird anschließend integriert und das Vorzeichen der Integration wird in einer Decodierstufe zu vorgegebenen Zeitpunkten abgefragt, um die in den binären Datensignalen enthaltenen Daten wiederzugewinnen.

Die bekannte Schaltungsanordnung ermöglicht eine weitgehend störungssichere Erkennung der in den Datensignalen enthaltenen Daten, sofern die Bezugssignale keine Phasenabweichungen gegenüber den Sollverläufen der Datensignale aufweisen. Da der Phasenregelkreis jedoch von den gegebenenfalls gestörten Datensignalen angesteuert wird, wird beispielsweise die Phasenbeziehung zwischen den von dem Phasenregelkreis abgegebenen Bezugssignalen und den Datensignalen durch zusätzliche Signalflanken nachhaltig gestört, wobei der Störeinfluß hauptsächlich vom Abstand zwischen den Stör- und Sollflanken der Datensignale abhängt.

Der Erfindung liegt daher die Aufgabe zugrunde, eine Schaltungsanordnung anzugeben, bei deren Verwendung die Störsicherheit bei der Wiedergewinnung der in den binären Datensignalen enthaltenen Daten noch weiter verbessert wird.

Erfindungsgemäß wird die Aufgabe bei der Schaltungsanordnung der eingangs genannten Art durch die im Patentanspruch 1 angegebenen Merkmale gelöst.

Die Schaltungsanordnung gemäß der Erfindung hat den Vorteil, daß infolge der Integration die Datensignale von Störsignalen, d. h. von zusätzlichen Flanken befreit werden und die Synchronisierung der Bezugssignale auf die Flanken der entstörten Datensignale bezogen werden. Der Störeinfluß ist damit weniger vom Abstand als von der Impulsdauer der Störsignale bzw. nur von deren Mittelwert innerhalb eines Integrationszeitraums abhängig. Die Schaltungsanordnung erweist sich insbesondere dann als zweckmäßig, wenn als Datensignale verstärkte und begrenzte Lesesignale von Magnetschichtspeichern, beispielsweise Magnetbandspeichern verwendet werden. In diesem Fall kann die Grundfrequenz der Datensignale infolge von Bandgeschwindigkeitsschwankungen um mehr als $\pm 20 \%$ schwanken, so daß es vorteilhaft sein kann, die Integrationszeitkonstante in Abhängigkeit von der Grundfrequenz der Datensignale zu verändern. Zweckmäßigerweise wird auch die Impulsdauer der Abtastsignale entsprechend der Grundfrequenz der Datensignale verändert.

Die Integration der Datensignale kann in Abhängigkeit vom jeweiligen Binärwert in beiden Richtungen durchgeführt werden, wobei die Integration beim Erreichen jeweils eines dem jeweiligen Binärwert zugeordneten Grenzwerts beendet wird. Es erweist sich jedoch als zweckmäßig, die Integration nur jeweils dann in einer Richtung durchzuführen, wenn zuvor ein der anderen Integrationsrichtung zugeordneter Grenzwert erreicht wurde.

Ein besonders einfacher Aufbau der Schaltungsanordnung wird dadurch erreicht, daß eine die Integrationszeitkonstante und/oder eine die Impulsdauer der Abtastsignale bestimmende Schaltstufe in ähnlicher Weise ausgebildet ist wie ein im Phasenregelkreis vorhandener Oszillator und daß die Schaltstufen in entsprechender Weise wie der Oszillator durch die Stellgröße des Phasenregelkreises in Abhängigkeit von der Frequenz der Bezugssignale angesteuert werden. Die Schaltstufen und der Oszillator enthalten zweckmäßigerweise einen Kondensator, der durch von der Stellgröße des Phasenregelkreises gesteuerte Stromquellen aufgeladen und entladen wird und mindestens einen Komparator, der die jeweilige Spannung am Kondensator mit mindestens einer Schwellenspannung vergleicht und beim Über- und Unterschreiten der Schwellenspannung Ausgangssignale abgibt.

Im folgenden wird ein Ausführungsbeispiel der Schaltungsanordnung gemäß der Erfindung anhand von Zeichnungen näher erläutert. Es zeigen

Fig. 1 ein Blockschaltbild der Schaltungsanordnung,

Fig. 2 ein Schaltbild eines Oszillators und einer Steuerstufe,

Fig. 3 Zeitdiagramme von Signalen an Verschiedenen Punkten des Oszillators,

Fig. 4 ein Schaltbild einer Integrierstufe,

Fig. 5 Zeitdiagramme Von Signalen an verschiedenen Punkten der Schaltungsanordnung.

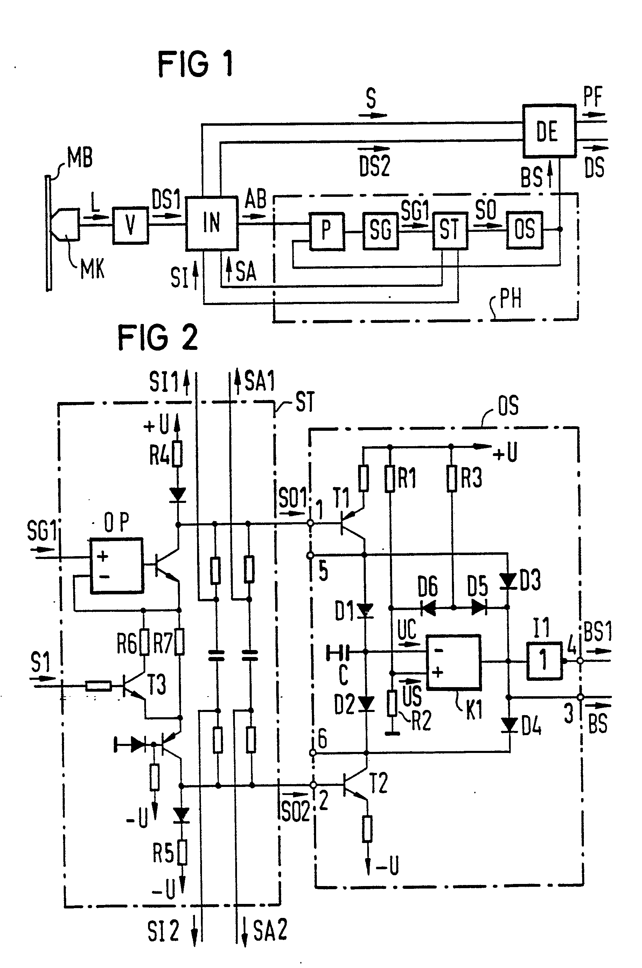

Bei der in Fig. 1 dargestellten Schaltungsanordnung werden Daten von einer Magnetschicht, beispielsweise von einem Magnetband MB unter Verwendung eines Magnetkopfs MK gelesen. Die Daten sind in Lesesignalen L codiert enthalten. Die Lesesignale L werden in einem Verstärker V verstärkt, differenziert, gegebenenfalls gefiltert und begrenzt. An seinem Ausgang gibt der Verstärker V binäre Datensignale DS1 ab. Diese Datensignale DS1 werden einer Integrierstufe IN zugeführt, die die Datensignale DS1 mindestens teilweise integriert und begrenzt und die einerseits Abtastsignale AB an einen an sich bekannten Phasenregelkreis PH abgibt und andererseits weitere Datensignale DS2 an eine an sich bekannte Decodierstufe DE abgibt, die aus diesen weiteren Datensignalen DS2 unter Verwendung von vom Phasenregelkreis PH abgegebenen Bezugssignalen BS die Daten wiedergewinnt und in Form von Datensignalen DS abgibt. Der Decodierstufe DE werden von der Integrierstufe IN noch weitere Signale S zugeführt, die es erlauben bei einer zu großen phasenmäßigen Abweichung zwischen den Datensignalen DS1 oder DS2 oder den Abtastsignalen AB und den Bezugssignalen BS einen Phasenfehler durch ein entsprechendes Phasenfehlersignal PF anzuzeigen.

Der Phasenregelkreis PH enthält in bekannter Weise einen Phasendetektor P, ein Stellglied SG und einen Oszillator OS, der die Bezugssignale BS erzeugt. Zusätzlich enthält der Phasendetektor PH eine Steuerstufe ST, die einerseits die Stellgröße SG1 als Steuerspannung SO an den Oszillator OS abgibt und die andererseits an die Integrierstufe IN Steuerspannungen SI und SA abgibt, um dort die Integrationszeitkonstante bzw. die Impulsdauer der Abtastsignale AB an eine Grundfrequenz der Datensignale DS1 bzw. an die Frequenz der Bezugssignale BS anzupassen.

Der in Fig. 2 dargestelle Oszillator OS stellt eine Baueinheit der Schaltungsanordnung dar, die in entsprechender Ausführung als Schaltstufe in der Integrierstufe IN zum Integrieren der Datensignale DS1 und zum Erzeugen der Abtastsignale AB verwendet wird.

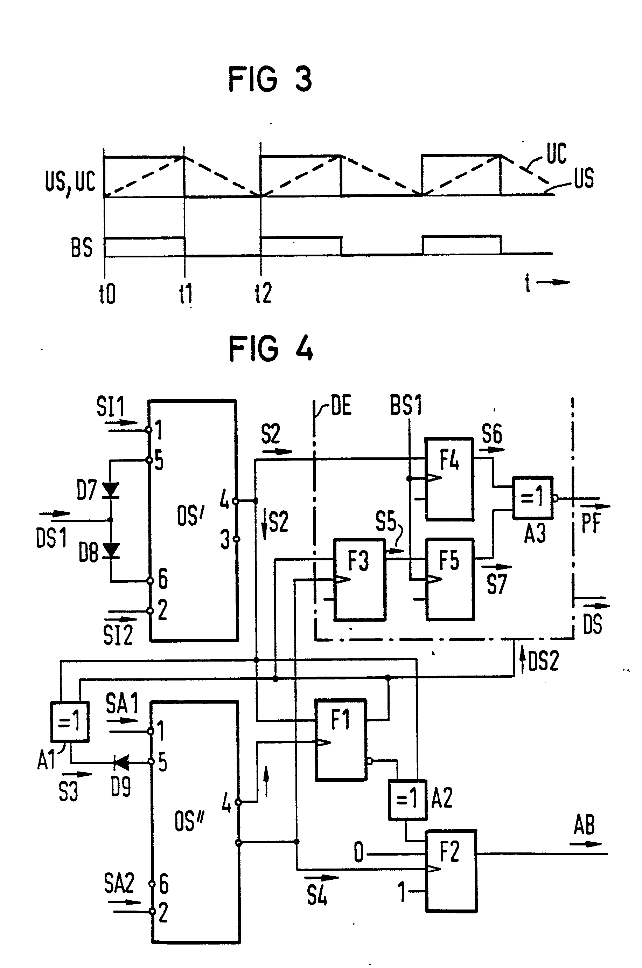

Der Oszillator OS enthält zwei aus den Transistoren T1 und T2 gebildete Stromquellen, die durch die von der Steuerstufe ST abgegebenen und an den Anschlußpunkten 1 und 2 anliegenden Steuersignale SO1 und SO2 gesteuert werden. Ein Kondensator C wird über die Transistoren T1 und T2 wechselweise aufgeladen oder entladen. Ein Komparator K1 vergleicht ständig die Spannung UC am Kondensator C mit einer mittels eines Spannungsteilers aus den Widerständen R1 und R2 erzeugten Schwellenspannung US und gibt an seinem Ausgang 3 die Bezugssignale BS ab. Weitere Einzelheiten werden zusammen mit den in Fig. 3 dargestellten Zeitdiagrammen beschrieben.

Zum Zeitpunkt t0 in Fig. 3 wird der Kondensator C über den Transistor T1 und eine Diode D1 aufgeladen. Das Bezugssignal BS weist zu diesem Zeitpunkt den Binärwert 1 auf, so daß die Dioden D2 und D3 gesperrt sind. Der Komparator K1 übernimmt über die Diode D4 den Strom des Transistors T2. Die Diode D5 ist ebenfalls gesperrt und es fließt ein Strom über den Widerstand R3 und die Diode D6, sodaß die Schwellenspannung US einen verhältnismäßig hohen Wert aufweist.

Wenn zum Zeitpunkt t1 die Spannung UC die hohe Schwellenspannung US erreicht, nimmt der Ausgang des Komparators K1 den Binärwert 0 an. Damit übernimmt dieser den Strom aus dem Widerstand R3 über die Diode D5. Jetzt sperrt die Diode D6 und die Schwellenspannung US nimmt einen niedrigen Wert an. Da das Binärsignal BS nun den Binärwert 0 hat, der einem Spannungswert zugeordnet ist, der kleiner ist als die Spannung UC, sperren die Dioden D4 und D1 und der Transistor T2 entlädt über die Diode D2 den Kondensator C solange, bis die Spannung UC zum Zeitpunkt t2 die niedrige Schwellenspannung US unterschreitet. Nach dem Zeitpunkt t2 wiederholt sich der gleiche Vorgang wie zwischen den Zeitpunkten t0 und t2, sodaß die Bezugssignale BS periodische Rechtecksignale darstellen.

Die Frequenz des Oszillators OS kann durch die Steuersignale SO1 und SO2 verändert werden, wobei die Steigung der Spannung UC bei konstantem Hub verändert wird. Dem Komparator K1 ist ein Inverter I1 nachgeschaltet, der am Ausgang 4 die invertierten Bezugssignale BS1 abgibt. Zwischen dem Transistor T1 und der Diode D1 sowie zwischen der Diode D2 und dem Transistor T2 sind Anschlußpunkte 5 und 6 vorgesehen, die bei der Verwendung von dem Oszillator OS entsprechenden Baueinheiten in der Integrierstufe IN zusätzlich beschaltbar sind.

Die in Fig. 2 weiterhin dargestellte Steuerstufe ST erzeugt in Abhängigkeit Von der vom Stellglied SG abgegebenen Stellgröße SG1 die Steuersignale SO1 und SO2 für den Oszillator OS. Weiterhin erzeugt sie die Steuersignale SI1 und SI2 bzw. SA1 und SA2 zum Einstellen der Integrationszeitkonstante bzw. der Impulsdauer der Abtastsignale AB in der Integrierstufe IN. Der Steuerstufe ST wird vom Stellglied SG die Stellgröße SG1 zugeführt, deren Momentanwert einer Grundfrequenz der Datensignale DS1 und der Frequenz der Bezugssignale BS entspricht. An den Widerständen R4 und R5 fallen Spannungen ab, die der Stellgröße SG1 proportional sind. Diese Spannungen steuern unmittelbar die Stromquellen T1 und T2 durch die Steuersignale SO1 und SO2. Für die Erzeugung der Steuersignale SI1 und SI2 bzw. SA1 und SA2 sind zusätzliche RC-Filter vorgesehen, um die Einwirkung von Störimpulsen zu vermindern. Durch ein Signal S1 ist eine Änderung der Steuerspannungen möglich, wenn der Transistor T3 leitend gesteuert ist und damit die Widerstände R6 und R7 parallel geschaltet sind. Das Steuersignal S1 dient beispielsweise bei der Verwendung der Schaltungsanordnung zum Wiedergewinnen von auf dem Magnetband MB aufgezeichneten Daten dazu, die Frequenz der Bezugssignale BS bei der Verwendung von verschiedenen Aufzeichnungsverfahren umzuschalten. Beispielsweise wird die Frequenz der Bezugssignale BS durch das Signal S1 auf etwa den dreifachen Wert erhöht, wenn die Daten nach dem GCR-Verfahren anstatt dem Richtungstaktschriftverfahren aufgezeichnet sind.

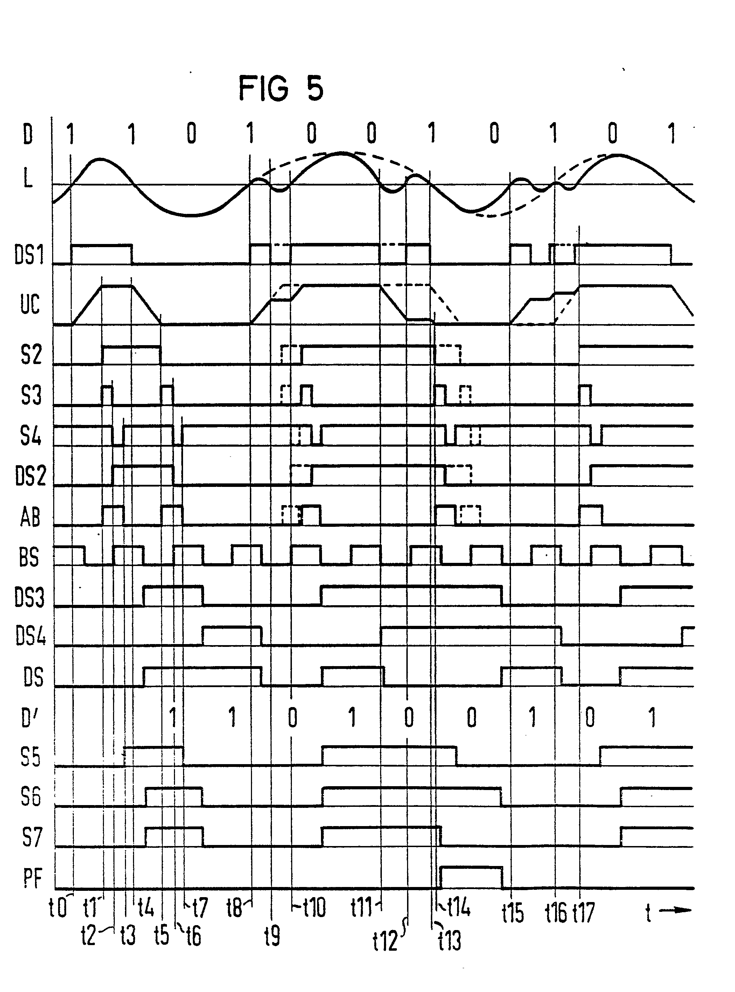

Die in Fig. 4 dargestellte Integrierstufe enthält zwei Schaltstufen OS' und OS", deren Aufbau mit dem Aufbau des Oszillators OS identischen ist. Die Schaltstufe OS' dient zum Integrieren der Datensignale DS1 und die Schaltstufe OS" dient zum Erzeugen der Abtastsignale AB. Außerdem zeigt die Fig. 4 einen Teil der Decodierstufe DE, der zum Erzeugen eines Phasenfehlersignals PF dient. Weitere Einzelheiten der in Fig. 4 dargestellten Integrierstufe IN werden im folgenden anhand der in Fig. 5 dargestellten Zeitdiagramme beschrieben.

Bei den in Fig. 5 dargestellten Zeitdiagrammen wird angenommen, daß eine vorgegebene Datenfolge D entsprechend dem allgemein bekannten GCR-Verfahren auf dem Magnetband MB aufgezeichnet wurden. Die vom Magnetkopf MK abgegebenen Lesesignale L, in denen die Daten D codiert enthalten sind, werden im Verstärker V verstärkt und differenziert. Dadurch werden aus den Lesesignalen L die differenzierten Lesesignale L, die in Fig. 5 teilweise gestört dargestellt, wobei der jeweils ungestörte Verlauf gestrichelt dargestellt ist. Am Ausgang des Verstärkers V werden die Datensignale DS1 abgegeben, die den verstärkten und begrenzten Lesesignalen L entsprechen. Diese Datensignale DS1 werden der Integrierstufe IN zugeführt.

Wenn zum Zeitpunkt t0 das Datensignal DS1 den Binärwert 1 annimmt, wird die am Anschlußpunkt 5 angeschlossene Diode D7 gesperrt und der Kondensator C' in der Schaltstufe OS' aufgeladen. Die Steigung mit der der Kondensator C' aufgeladen wird, wird durch das Steuersignal SI1 bestimmt. Zum Zeitpunkt t1 erreicht die Spannung UC am Kondensator C den hohen Schwellenwert US, so daß die Aufladung beendet wird und das Signal S2 am Ausgang der Schaltstufe OS' den Binärwert 1 annimmt. Gleichzeitig wird die Schwellenspannung US auf den niedrigen Wert umgeschaltet. Die Entladung des Kondensators C wird jedoch noch nicht begonnen, da das Datensignal DS1 noch den Binärwert 1 hat. Ein Signal S3 am Ausgang eines Antivalenzglieds A1 nimmt zum Zeitpunkt t1 ebenfalls den Binärwert 1 an. Dieses Signal S3 steuert über eine Diode D9 die Schaltstufe OS'' an, bei der nun ebenfalls der Kondensator C'' aufgeladen wird. Wenn dieser zum Zeitpunkt t2 aufgeladen ist, nimmt ein Signal S4 am Ausgang der Schaltstufe OS'' den Binärwert 0 an und der Kondensator C'' wird wieder entladen. Das dem invertierten Signal S4 entsprechende Signal wird einem Flipflop F1 zugeführt, das gesetzt wird. An seinem nichtinvertierenden Ausgang gibt das Flipflop F1 das Datensignal DS2 ab, das einerseits der Decodierstufe DE und andererseits dem Antivalenzglied A1 zugeführt wird. Das Antivalenzglied A1 verknüpft das Datensignal DS2 mit dem Signal S2, um das Signal S3 zu erzeugen. Das Signal am invertierenden Ausgang des Flipflops F1 wird einem ersten Eingang eines weiteren Antivalenzglieds A2 zugeführt, an dessen zweitem Eingang das Signal S2 anliegt. Das Ausgangssignal dieses Antivalenzglieds A2 setzt ein Flipflop F2, das jeweils mit der ansteigenden Flanke des Signals S4 wieder zurückgesetzt wird. An seinem Ausgang gibt das Flipflop F2 die Abtastsignale AB ab, die dem Phasendetektor P des Phasenregelkreises PH zugeführt werden. Der Phasenregelkreis PH erzeugt die Bezugssignale BS, die frequenz- und phasenmäßig derart geregelt werden, daß die ansteigende Flanke möglichst genau in die Mitte der Abtastsignale AB fällt, wie es zum Zeitpunkt t2 dargestellt ist.

Das Signal S4 hat während einer Zeitdauer von ca. 20 % der Periodendauer der Bezugssignale BS den Binärwert 0. Zum Zeitpunkt t3, mit der ansteigenden Flanke des Signals S4, wird das Abtastsignal AB beendet und am Ausgang eines Flipflops F3 nimmt ein Signal S5, das dem verzögerten Datensignal DS2 entspricht, den Binärwert 1 an. Dieses Signal S5 dient zusammen mit dem Signal S2 zur Erzeugung des Phasenfehlersignals PF.

Zum Zeitpunkt t4 nimmt das Datensignal DS1 den Binärwert 0 an. Die am Anschlußpunkt 6 angeschlossene Diode D8 wird gesperrt und die Entladung des Kondensators C' von OS' wird begonnen. Zum Zeitpunkt t5 ist die Entladung beendet und das Signal S2 nimmt den Binärwert 0 an. Damit werden wieder ein Signal S3 und ein Abtastsignal AB erzeugt. Zum Zeitpunkt t6 nimmt das Datensignal DS2 wieder den Binärwert 0 an, so daß das Signal S3 beendet wird und das Signal S4 wieder den Binärwert 0 annimmt. Zum Zeitpunkt t7 ist auch das Signal S4 beendet und das Signal S5 nimmt seinen Binärwert 0 an. Nach dem Zeitpunkt t8 wiederholen sich ähnliche Vorgänge wie zum Zeitpunkt t0. Es wird jedoch angenommen, daß das Datensignal DS1 zwischen den Zeitpunkten t9 und t10 sowie zwischen den Zeitpunkten t11 und t12 Störungen aufweist. Der Kondensator C' in der Schaltstufe OS' wird daher zwischen den Zeitpunkten t9 und t10 nicht aufgeladen. Es findet auch keine Entladung statt, da die Spannung UC am Kondensator C' noch nicht den hohen Schwellenwert US erreicht hat. Erst wenn die Spannung UC nach dem Zeitpunkt t10 den Schwellenwert US erreicht hat, nimmt das Signal S2 den Binärwert 1 an und es werden ein Signal S3 und ein Abtastsignal AB erzeugt. Der Idealverlauf ist bei den Signalen UC und S2 gestrichelt dargestellt. Infolge der Störung ist das Abtastsignal AB verschoben.

Infolge der Störung zwischen den Zeitpunkten t11 und t12 wird der Kondensator C' von OS' schon vorzeitig entladen. Zwischen den Zeitpunkten t12 und t13 findet jedoch keine weitere Entladung statt, da der Kondensator C' noch nicht bis zu seinem niedrigen Schwellenwert US entladen wurde. Erst zum Zeitpunkt t14 ist der Kondensator C vollständig entladen, nachdem das Datensignal DS1 wieder den Binärwert 0 angenommen hat. Zum Zeitpunkt t14 werden daher ein Signal S3 und ein Abtastsignal AB erzeugt. Auch dieses Abtastsignal AB ist gegenüber seiner Sollage, die gestrichelt dargestellt ist, verschoben.

Zu den Zeitpunkten t15 und t16 werden weitere Störungen angenommen. Nach dem Zeitpunkt t15 laufen wiederum ähnliche Vorgänge ab wie nach dem Zeitpunkt t8, sodaß zum Zeitpunkt t17 das Signal S2 wieder den Binärwert 1 annimmt und ein Signal S3 und ein Abtastsignal AB erzeugt werden. Das Abtastsignal AB ist phasenmäßig gegen die Bezugssignale BS nicht verschoben, da sich die Wirkung der Störungen zu den Zeitpunkten t15 und t16 gegeneinander aufheben.

Die Decodierstufe DE tastet in an sich bekannter Weise die Datensignale DS2 unter Verwendung der Bezugssignale BS ab. Mit jeder abfallenden Flanke eines Bezugssignals BS wird der Momentanwert des jeweiligen Datensignals DS2 abgefragt, wodurch sich das Datensignal DS3 ergibt. Dieses Datensignal DS3 wird anschließend um die Periodendauer der Bezugssignale BS verzögert, so daß das Datensignal DS4 entsteht. Eine Antivalenzverknüpfung der Datensignale DS3 und DS4 ergibt die Datensignale DS, deren Binärwerte zu den Zeitpunkten der ansteigenden Flanke der Bezugssignale BS die wiedergewonnenen Daten D' angeben.

Das Flipflop F4 wird jeweils mit der abfallenden Flanke der Bezugssignale BS gesetzt bzw. zurückgesetzt, wenn die Signale S2 den Binärwert 1 bzw. den Binärwert 0 aufweisen. In entsprechender Weise wird das Flipflop F5 gesetzt bzw. zurückgesetzt, wenn die Signale S5 den Binärwert 1 bzw. 0 aufweisen. Die Ausgangssignale S6 bzw. S7 der Flipflops F4 bzw. F5 werden einem Äquivalenzglied A3 zugeführt, das an seinem Ausgang durch das Signal PF einen Phasenfehler anzeigt, wenn der Abtastimpuls AB, wie nach dem Zeitpunkt t14 eine unzulässig große Phasenverschiebung gegenüber einem Bezugssignal BS aufweist.

Der Oszillator OS sowie die Schaltstufen OS' und OS" könnten auch derart ausgebildet sein, daß zwei Komparatoren Verwendet werden, die die Spannung UC am Kondensator C mit zwei unterschiedlichen Schwellenspannungen vergleichen, die durch Spannungsteiler aus den Betriebsspannungen + U und — U erzeugt werden. Die Ausgänge der beiden Komparatoren würden in diesem Fall einem Flipflop zugeführt werden, das wechselweise gesetzt bzw. zurückgesetzt wird. Die Dioden D3 und D4 würden dann an einem Ausgang des Flipflops angeschlossen werden. Falls die Dioden D3 und D4 an den Ausgängen der jeweiligen Komparatoren angeschlossen werden würden, hätte dies zur Folge, daß die Integration der Datensignale DS1 zwischen den Grenzwerten unabhängig davon durchgeführt werden würde, ob die Spannung UC zuvor eine der Schwellenspannungen erreicht hat. Entsprechend Fig. 5 würde dann nach den Zeitpunkten t9 bzw. t12 die Spannung UC infolge der Störung dann abnehmen bzw. zunehmen und nicht, wie in Fig. 5 dargestellt, konstant bleiben. Eine derartige Ausgestaltung der Schaltungsanordnung erweist sich insbesondere dann als zweckmäßig, wenn das Lesesignal L zwischen den Soll-Nulldurchgängen weitere Nulldurchgänge infolge von Einsattelungen der Lesesignale L aufweist.

Die Steuersignale SI1 und SI2 bzw. SA1 und SA2 liegen an den Anschlußpunkten 1 und 2 der Schaltstufen OS' und OS" an, um die Integrationszeitkonstante bzw. die Impulsdauer der Abtastsignale AB in Abhängigkeit von einer Grundfrequenz der Datensignale DS1 oder der Frequenz der Bezugssignale BS zu verändern, indem die Steigung, mit der der Kondensator C in den Schaltstufen OS' und OS" aufgeladen wird, verändert wird. Die Integrationszeitkonstante ist zweckmäßigerweise derart eingestellt, daß die Spannung UC am Kondensator C in der Schaltstufe OS' im Normalfall nach jeweils der halben Periodendauer der Bezugssignale BS einen der Grenzwerte erreicht.

## Patentansprüche

1. Schaltungsanordnung zum Wiedergewinnen von in binären Datensignalen enthaltenen Daten, bei der ein Phasenregelkreis den Datensignalen frequenz- und phasenmäßig zugeordnete Bezugssignale erzeugt, bei der eine Integrierstufe (IN) vorgesehen ist und bei der eine Decodierstufe (DE) unter Verwendung der Bezugssignale die in den Datensignalen enthaltenen Daten wiedergewinnt, dadurch gekennzeichnet, daß die Integrierstufe (IN) die Datensignale (DS1) teilweise integriert und begrenzt und die den integrierten und begrenzten Datensignalen zugeordnete Abtastsignale (AB) und zugeordnete weitere Datensignale (DS2) an den Phasenregelkreis (PH) bzw. an die Decodierstufe (DE) abgibt.

2. Schaltungsanordnung nach Anspruch 1, dadurch gekennzeichnet, daß die Integrationszeitkonstante und/oder die Impulsdauer der Abtastsignale (AB) in Abhängigkeit von einer Grundfrequenz der Datensignale (DS1) veränderbar ist.

3. Schaltungsanordnung nach Anspruch 1 oder Anspruch 2, dadurch gekennzeichnet, daß die Integrationszeitkonstante und/oder die Impulsdauer der Abtastsignale (AB) unter Verwendung der Stellgröße (SG1) des Phasenregelkreises (PH) veränderbar ist.

4. Schaltungsanordnung nach einem der Ansprüche 1 bis 3, dadurch gekennzeichnet, daß eine die Integration der Datensignale (DS1) und eine die Abtastimpulse (AB) erzeugende Schaltstufe (OS' bzw. OS") in ähnlicher Weise ausgebildet sind wie ein im Phasenregelkreis (PH) vorhandener Oszillator (OS), der die Bezugssignale (BS) erzeugt und daß die Schaltstufen (OS', OS") in entsprechender Weise wie der Oszillator (OS) über eine Steuerstufe (ST) durch die Stellgröße (SG1) des Phasenregelkreises (PH) angesteuert werden.

5. Schaltungsanordnung nach Anspruch 4, dadurch gekennzeichnet, daß der Oszillator (OS) und die Schaltstufen (OS', OS") jeweils einen Kondensator (C) enthalten, der durch von der Stellgröße (SG1) des Phasenregelkreises (PH) gesteuerte Stromquellen (T1, T2) aufgeladen bzw. entladen wird und mindestens einen Komparator (K1) enthält, der die Spannung (UC) am Kondensator (C) mit mindestens einer Schwellenspannung (US) vergleicht und beim Über- bzw. Unterschreiten der Schwellenspannung (US) das Bezugssignal (BS) bzw. entsprechende Ausgangssignale (S2, S4) abgibt.

6. Schaltungsanordnung nach einem der Ansprüche 1 bis 5, dadurch gekennzeichnet, daß die Integrierstufe (IN) Signale (S2) erzeugt, deren Binärwerte sich immer dann ändern, wenn die integrierten und begrenzten Datensignale jeweils einen der beiden Grenzwerte erreicht haben.

7. Schaltungsanordnung nach Anspruch 6, dadurch gekennzeichnet, daß die Integrierstufe (IN) die Abtastsignale (AB) bei jeder Änderung der Signale (S2) abgibt.

8. Schaltungsanordnung nach Anspruch 6 oder Anspruch 7, dadurch gekennzeichnet, daß die weiteren Datensignale (DS2) den verzögerten Signalen (S2) entsprechen.

9. Schaltungsanordnung nach einem der Ansprüche 1 bis 8, dadurch gekennzeichnet, daß die Decodierstufe (DE) Schaltglieder (F3, F4, F5, A3) enthält, die bei einer fehlerhaften phasenmäßigen Zuordnung zwischen den Abtastsignalen (AB) und den Bezugssignalen (BS) ein Phasenfehlersignal (PF) erzeugen.

10. Schaltungsanordnung nach einem der Ansprüche 1 bis 9, dadurch gekennzeichnet, daß als Datensignale (DS1) verstärkte, differenzierte und begrenzte Lesesignale (L) eines Magnetschichtspeichers vorgesehen sind.

11. Schaltungsanordnung nach Anspruch 10, dadurch gekennzeichnet, daß als Magnetschichtspeicher ein Magnetbandgerät vorgesehen ist, mittels dem Daten nach dem an sich bekannten Richtungstaktschriftverfahren, dem GCR-Verfahren oder einem anderen lauflängenbegrenzten NRZ-Verfahren auf einem Magnetband (MB) aufgezeichnet sind.

## Claims

1. Circuit for retrieving data contained in binary data signals, in which a phase-locked loop generates reference signals associated with the data signals in terms of frequency and phase, in which an integrating stage (IN) is provided and in which a decoding stage (DE) retrieves the data contained in the data signals using the reference signals, characterized in that the integrating stage (IN) partially integrates and limits the data signals (DS1) and outputs sampling signals (AB) associated with the integrated and limited data signals, and associated further data signals (DS2) to the phase-locked loop (PH) or the decoding stage (DE).

2. Circuit according to Claim 1, characterized in that the integration time constant and/or the pulse duration of the sampling signals (AB) can be changed as a function of a basic frequency of the data signals (DS1).

3. Circuit according to Claim 1 or Claim 2, characterized in that the integration time constant and/or the pulse duration of the sampling signals (AB) can be changed using the control variable (SG1) of the phase-locked loop (PH).

4. Circuit according to one of Claims 1 to 3, characterized in that a switching stage (OS' or OS'') generating the integration of the data signals (DS1) and one generating the sampling pulses (AB) are designed in a similar manner as an oscillator (OS) which is present in the phase-locked loop (PH) and generates the reference signals (BS), and in that the switching stages (OS', OS'') are controlled in a similar manner as the oscillator (OS) via a control stage (ST) by the control variable (SG1) of the phase-locked loop (PH).

5. Circuit according to Claim 4, characterized in that the oscillator (OS) and the switching stages (OS', OS'') each contain a capacitor (C) which is charged or discharged by current sources (T1, T2) controlled by the control variable (SG1) of the phase-locked loop (PH) and contains at least one comparator (K1) which compares the voltage (UC) at the capacitor (C) with at least one threshold voltage (US), and if the threshold voltage (US) is exceeded or not reached outputs the reference signal (BS) or corresponding output signals (S2, S4).

6. Circuit according to one of Claims 1 to 5, characterized in that the integrating stage (IN) generates signals (S2), the binary values of which always change whenever the integrated and limited data signals in each case have reached one of the two limit values.

7. Circuit according to Claim 6, characterized in that the integrating stage (IN) outputs the sampling signals (AB) each time the signals (S2) change.

8. Circuit according to Claim 6 or Claim 7, characterized in that the further data signals (DS2) correspond to the delayed signals (S2).

9. Circuit according to one of Claims 1 to 8, characterized in that the decoding stage (DE) contains switching elements (F3, F4, F5, A3) which generate a phase error signal (PF) when there is an incorrect phase alignment between the sampling signals (AB) and the reference signals (BS).

10. Circuit according to one of Claims 1 to 9, characterized in that amplified, differentiated and limited read signals (L) of a magnetic layer memory are envisaged as data signals (DS1).

11. Circuit according to Claim 10, characterized in that there is envisaged as magnetic layer memory a magnetic tape device by means of which data are recorded on a magnetic tape (MB) according to the phase encoding method, the GCR method or another run-length limited NRZ method known per se.

## Revendications

1. Circuit pour récupérer des données contenues dans des signaux de données binaires dans lequel un circuit de réglage de phase génère des signaux de référence coordonnés en fréquence et en phase aux signaux de données, dans lequel est prévu un étage intégrateur (IN) et dans lequel un étage décodeur (DE) récupère les données contenues dans les signaux de données en utilisant les signaux de référence, caractérisé en ce que l'étage intégrateur (IN) intègre partiellement et limite les signaux de données (DS1) et délivre des signaux d'échantillonnage (AB) coordonnés aux signaux de données intégrés et limités et des signaux de données supplémentaires (DS2) coordonnés, respectivement au circuit de réglage de phase (PH) et à l'étage décodeur (DE).

2. Circuit selon la revendication 1, caractérisé en ce que la constante de temps pour l'intégration et/ou la durée d'impulsion des signaux d'échantillonnage (AB) est ou sont variable(s) en fonction d'une fréquence fondamentale des signaux de données (DS1).

3. Circuit selon la revendication 1 ou 2, caractérisé en ce que la constante de temps pour l'intégration et/ou la durée d'impulsion des signaux d'échantillonnage (AB) est ou sont variable(s) à l'aide de la grandeur réglante (SG1) du circuit de réglage de phase (PH).

4. Circuit selon une des revendications 1 à 3, caractérisé en ce qu'il comprend deux étages de commutation (OS', OS''), l'un pour l'intégration des signaux de données (DS1) et l'autre pour générer les impulsions d'échantillonnage (AB), qui ont une conformation analogue à celle d'un oscillateur (OS) présent dans le circuit de réglage de phase (PH) et qui génère les signaux de référence, et que les étages de commutation (OS', OS'') sont attaqués, d'une façon qui correspond à celle de l'oscillateur (OS), par la grandeur réglante (SG1) du circuit de réglage de phase (PH), par l'intermédiaire d'un étage de commande (ST).

5. Circuit selon la revendication 4, caractérisé en ce que l'oscillateur (OS) et les étages de commutation (OS', OS'') contiennent chacun un condensateur (C) qui est chargé et déchargé par des sources de courant (T1, T2) commandées par la grandeur réglante (SG1) du circuit de réglage de phase (PH), ainsi qu'au moins un comparateur (K1) qui compare la tension (UC) sur le condensateur (C) avec au moins une tension de seuil (US) et qui délivre le signal de référence (BS) et des signaux de sortie (S2, S4) correspondants lorsque la tension au condensateur dépasse ou descend au-dessous de la tension de seuil (US).

6. Circuit selon une des revendications 1 à 5, caractérisé en ce que l'étage intégrateur (IN) génère des signaux (S2) dont les valeurs binaires changent toujours lorsque les signaux de données intégrés et limités ont atteint l'une des deux valeurs limites.

7. Circuit selon la revendication 6, caractérisé en ce que l'étage intégrateur (IN) délivre les signaux d'échantillonnage (AB) à chaque changement des signaux (S2).

8. Circuit selon la revendication 6 ou 7, caractérisé en ce que les signaux de données supplémentaires (DS2) correspondent aux signaux (S2) retardés.

9. Circuit selon une des revendications 1 à 8, caractérisé en ce que l'étage décodeur (DE) contient des éléments de commutation (F3, F4, F5, A3) qui génèrent un signal d'erreur de phase (PF) lorsque la coordination en phase entre les signaux d'échantillonnage (AB) et les signaux de référence (BS) est défectueuse.

10. Circuit selon une des revendications 1 à 9, caractérisé en ce que les signaux de données (DS1) sont des signaux de lecture (L) amplifiés, différenciés et limités d'une mémoire à couche magnétique.

11. Circuit selon la revendication 10, caractérisé en ce que la mémoire à couche magnétique est un appareil à bande magnétique au moyen duquel des données sont enregistrées sur une bande magnétique (MB) selon le procédé connu d'enregistrement en modulation de phase, le procédé (GCR) ou un autre procédé NRZ à longueur d'enregistrement limitée.

# FIG 1

# FIG 2

# FIG 3

# FIG 4

# FIG 5